# EUROPÄISCHE PATENTSCHRIFT

(11) **EP 3 599 115 B1**
(45) Veröffentlichungstag und Bekanntmachung des Hinweises auf die Patenterteilung: **21.04.2021**
(21) Anmeldenummer: 19181743.6
(22) Anmeldetag: 21.06.2019
(51) Int. Cl.: B60D 1/06, B60D 1/36, B60D 1/62, G05D 1/02, B60R 1/00, B62D 15/02, G06K 9/00

(54) **VERFAHREN UND SYSTEM ZUM AUTOMATISCHEN ERKENNEN EINES ANKUPPELMANÖVERS EINES KRAFTFAHRZEUGS AN EINEN ANHÄNGER**
METHOD AND SYSTEM FOR AUTOMATED DETECTION OF A COUPLING MANOEUVRE OF A MOTOR VEHICLE TO A TRAILER
PROCÉDÉ ET SYSTÈME DE DÉTECTION AUTOMATIQUE D'UNE MANOEUVRE D'ACCOUPLEMENT D'UN VÉHICULE AUTOMOBILE À UNE REMORQUE

(30) Priorität: 25.07.2018 DE 102018212401
(43) Veröffentlichungstag der Anmeldung: 29.01.2020
(73) Patentinhaber: VOLKSWAGEN AKTIENGESELLSCHAFT, 38440 Wolfsburg (DE)
(72) Erfinder: Simon, Kraftschik, 38300 Wolfenbüttel (DE); Hüger, Philipp, 38471 Rühen (DE); Ziebart, Sascha, 38547 Calberlah (Wettmershagen) (DE)

(56) Entgegenhaltungen:
- WO-A1-2017/009330
- WO-A2-2016/164118
- DE-A1- 10 302 545
- DE-A1-102004 043 761
- GB-A- 2 415 173
- US-A1- 2011 001 614
- US-A1- 2013 321 634

## Beschreibung

Die Erfindung betrifft ein Verfahren und ein System zum automatischen Erkennen eines Ankuppelmanövers eines Kraftfahrzeugs an einen Anhänger.

Ein Ankuppelmanöver zum Ankuppeln eines Anhängers an ein Kraftfahrzeug stellt oftmals für viele Fahrer eine große Herausforderung dar. Eine Anhängerkupplung des Anhängers muss dabei mittels einer kraftfahrzeugseitigen Anhängerkupplung präzise getroffen werden. Die Anhängerkupplung des Anhängers ist üblicherweise aber über jeweilige Spiegel des Kraftfahrzeugs und einen Blick nach hinten nicht zu sehen.

Aus dem Stand der Technik sind bereits Anhängerankuppelassistenten für Kraftfahrzeuge bekannt, welche dazu ausgelegt sind, eine Längs- und/oder Querführung eines Kraftfahrzeugs zur Unterstützung eines Ankuppelmanövers zu übernehmen. Die US 2009/0236825 A1 zeigt beispielsweise einen solchen Anhängerankuppelassistenten. Dieser Anhängerankuppelassistent kann automatisch die Lenkung eines Kraftfahrzeugs übernehmen, um ein Ankuppelmanöver zum Ankuppeln des Kraftfahrzeugs an einen Anhänger zu vereinfachen.

Problematisch jedoch kann sein, dass ein Fahrer beispielsweise über entsprechende Tasten im Kraftfahrzeug und über eine anschließende Auswahl des anzuhängenden Anhängers einen derartigen Anhängerankuppelassistenten erst einmal manuell aktivieren muss. Die Aktivierung eines solchen Anhängerankuppelassistenten kann also für einen Fahrer relativ aufwendig sein. Zudem kann es auch vorkommen, dass bei Fahrzeugnutzern die verbauten Assistenzsysteme des betreffenden Kraftfahrzeugs, insbesondere im Hinblick auf einen solchen Anhängerankuppelassistenten, gar nicht bekannt sind und daher gar nicht genutzt werden.

Die DE 10 2012 001 380 A1 beschreibt ein Assistenzverfahren für ein Ankuppelmanöver eines Kraftfahrzeugs. Ein Fahrerassistenzsystem greift auf ein Rückfahrkamerasystem zu, um zum Unterstützen des Ankuppelmanövers eine Trajektorie bzw. Hilfslinie auf einem von der Rückfahrkamera auf einem Bildschirm dargestellten Bild einzublenden. Die Trajektorie zeigt an, auf welchem Weg sich eine Anhängerkupplung des Fahrzeugs bei einem vorbestimmten Lenkeinschlag bewegt, um die Kupplungspfanne des Anhängers ankuppeln zu können.

Die EP 3 263 370 A1 beschreibt einen Ankuppelassistenten zum Ankuppeln eines Kraftfahrzeugs an einen Anhänger. Dabei kann ein Fahrer auf einem fahrzeugseitigen Display, mittels welchem ein rückwärtiger Raum des Fahrzeugs angezeigt wird, eine Deichsel eines anzukuppelnden Anhängers in unterschiedlichen Zoom-Stufen markieren, was zu einer verbesserten Erkennung der Deichsel beitragen soll.

Die US 2017/0267241 A1 beschreibt ein Verfahren, bei welchem einem Fahrer je nach erfassten Randbedingungen unterschiedliche Fahrerassistenzsysteme zur Unterstützung der Fahraufgabe vorgeschlagen werden.

Die DE 10 2016 222 581 A1 beschreibt ein Verfahren, bei welchem Fahrmuster von einem Fahrer eines Kraftfahrzeugs erkannt und anschließend mittels Fahrerassistenzsystemen umgesetzt werden.

Die DE 11 2016 001 585 T5 beschreibt ein Verfahren, bei welchem ein Fahrerverhalten und Umfelddaten erfasst werden, wobei basierend darauf ein Abstandsregeltempomat oder beispielsweise ein Spurhalteassistent aktiviert werden.

Die DE 10 2004 043761 A1 beschreibt ein Verfahren, bei welchem ein Ankuppelmanöver eines Fahrzeugs an einen Anhänger automatisch erkannt wird.

Es ist die Aufgabe der vorliegenden Erfindung, eine Lösung bereitzustellen, mittels welcher einem Fahrer eines Kraftfahrzeugs ein Ankuppelmanöver zum Ankuppeln eines Anhängers erleichtert wird.

Diese Aufgabe wird durch ein Verfahren sowie durch ein System zum automatischen Erkennen eines Ankuppelmanövers eines Kraftfahrzeugs an einen Anhänger mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum automatischen Erkennen eines Ankuppelmanövers eines Kraftfahrzeugs an einen Anhänger wird eine Positionsveränderung einer Anhängerkupplung des Anhängers innerhalb eines Rückfahrkamerabilds des rückwärtsfahrenden Kraftfahrzeugs erfasst. Des Weiteren wird ein Datensatz bereitgestellt, der für eine Vielzahl von beim Rückwärtsfahren durchgeführten Ankuppelmanövern eines Referenzkraftfahrzeugs an eine Anhängerkupplung eines Referenzanhängers jeweilige Positionsverläufe umfasst, die jeweilige Positionsveränderungen der Anhängerkupplung innerhalb eines Rückfahrkamerabilds des Referenzkraftfahrzeugs charakterisieren. Die Positionsveränderung der Anhängerkupplung des rückwärtsfahrenden Kraftfahrzeugs wird mit den Positionsverläufen des Datensatzes verglichen. Alternativ wird eine Berechnungsformel auf Basis des Datensatzes bereitgestellt und die Positionsveränderung der Anhängerkupplung des rückwärtsfahrenden Kraftfahrzeugs mit der Berechnungsformel verglichen. Sobald ein vorgegebener Übereinstimmungsgrad mit einem der Positionsverläufe des Datensatzes oder mit der Berechnungsformel ermittelt wird, wird - nur sofern der Fahrer dies auch wünschen sollte - automatisch ein Anhängerankuppelassistent des Kraftfahrzeugs aktiviert, welcher dazu ausgelegt ist, eine Längs- und/oder Querführung des Kraftfahrzeugs zur Unterstützung des Ankuppelmanövers zu übernehmen.

Vor der automatischen Aktivierung wird eine Abfrage ausgegeben wird, ob ein Fahrer des Kraftfahrzeugs die automatische Aktivierung des Anhängerankuppelassistenten wünscht, wobei nur im Fall einer Bestätigung der Abfrage die automatische Aktivierung des Anhängerankuppelassistenten erfolgt. Nach der automatischen bzw. selbständigen Erkennung des vom Fahrer geplanten Ankuppelmanövers wird dieser also zunächst gefragt, ob er die automatische Aktivierung des Anhängerankuppelassistenten wünscht. Nur wenn er dies bestätigt, wird der Anhängerankuppelassistent auch aktiviert, infolgedessen dieser dann die Längs- und/oder Querführung des Kraftfahrzeugs zum Ankuppeln des Kraftfahrzeugs an den Anhänger übernimmt. Die Abfrage kann beispielsweise graphisch über ein entsprechendes Display innerhalb des Kraftfahrzeugs ausgegeben werden. Zusätzlich kann die Abfrage auch noch akustisch über Lautsprecher des Kraftfahrzeugs ausgegeben werden. So kann der Fahrer beispielsweise über entsprechende Tasten an einem Touchscreen oder auch über andere mechanische Tasten oder auch über einen Sprachbefehl die Abfrage bestätigen. Dadurch, dass der Anhängerankuppelassistent nur auf ausdrücklichen Fahrerwunsch hin aktiviert wird, wird der Fahrer nicht bevormundet und auch nicht durch eine automatische Aktivierung des Anhängerankuppelassistenten überrascht. Zudem ist es dadurch auch möglich, dass der Anhängerankuppelassistent nicht fälschlicherweise aktiviert wird, falls der Fahrer gar kein Ankuppelmanöver durchführen möchte.

Mittels des erfindungsgemäßen Verfahrens ist es also möglich, einen von einem Fahrer des Kraftfahrzeugs geplanten bzw. bevorstehenden Ankuppelvorgang eigenständig, also automatisch, zu erkennen, um in diesem Fall den Anhängerankuppelassistenten des Kraftfahrzeugs automatisch zu aktivieren - sofern der Fahrer dies auch vorher bestätigt. Ein Fahrer muss also den Anhängerankuppelassistenten nicht mehr über mehrere Stufen selbständig aktivieren. Die Basis für die selbständige Erkennung des vom Fahrer geplanten bzw. anstehenden Ankuppelvorgangs bzw. Ankuppelmanövers bildet dabei eine Fahrzeugsensorik des Kraftfahrzeugs, welche unter anderem eine Rückfahrkamera und eine Datenverarbeitungseinrichtung aufweist, welche dazu ausgelegt ist, die Bilder der Rückfahrkamera im Hinblick auf die Positionsveränderung der Anhängerkupplung auszuwerten und mit dem besagten Datensatz zu vergleichen.

Sobald also ein Fahrer mit seinem Kraftfahrzeug rückwärtsfährt, wird das Rückfahrkamerabild, welches mittels einer Rückfahrkamera des Kraftfahrzeugs bereitgestellt wird, ausgewertet. Dabei wird mit an sich bekannten Algorithmen zunächst nach einer Anhängerkupplung eines Anhängers im rückwärtigen Raum des Kraftfahrzeugs gesucht. Sobald eine solche Anhängerkupplung detektiert worden ist, wird beim Rückwärtsfahren fortlaufend eine Positionsveränderung der Anhängerkupplung innerhalb des Rückfahrkamerabilds erfasst. Je nachdem, wie der Fahrer des Kraftfahrzeugs rückwärts rangiert, kann dabei beim Heranfahren an die Anhängerkupplung diese innerhalb des Rückfahrkamerabilds nach oben und/oder zur Seite wandern. Der besagte Datensatz mit den verschieden Positionsverläufen kann in einem entsprechend dafür geeigneten Speicher des Kraftfahrzeugs bereitgestellt werden. Dieser Datensatz kann im Vorfeld dadurch gewonnen werden, dass mit einem geeigneten Referenzfahrzeug eine Vielzahl von Ankuppelmanövern beim Rückwärtsfahren an einen Referenzanhänger durchgeführt werden. Dabei werden jeweilige Positionsverläufe erfasst und abgespeichert, welche jeweilige Positionsveränderungen der Anhängerkupplung des Referenzanhängers innerhalb des Rückfahrkamerabilds des Referenzkraftfahrzeugs charakterisieren. All diese Positionsverläufe führen letztlich dazu, dass das Referenzkraftfahrzeug an den Referenzanhänger angekuppelt wurde. Der Datensatz liefert also eine Vielzahl von Daten im Hinblick auf die jeweilige Positionsveränderung der Anhängerkupplung innerhalb des Rückfahrkamerabilds des Referenzkraftfahrzeugs, während dieses vielfach an die Anhängerkupplung des Referenzanhängers angekuppelt worden ist.

Durch ein Vergleichen der Positionsveränderung der Anhängerkupplung des Kraftfahrzeugs, welches noch manuell vom betreffenden Fahrer rückwärts rangiert wird, mit den Positionsverläufen des Datensatzes kann auf sehr zuverlässige Weise ermittelt werden, ob der Fahrer des betreffenden Kraftfahrzeugs gerade tatsächlich ein Ankuppelmanöver an dem betreffenden Anhänger durchführen möchte oder nicht. Alternativ ist es auch möglich, statt den Datensatz im Kraftfahrzeug zu hinterlegen, basierend auf dem Datensatz eine Berechnungsformel im Kraftfahrzeug bereitzustellen. Mittels der Berechnungsformel kann beispielsweise eine Steigung der Positionsveränderung der Anhängerkupplung im Kamerabild berechnet und basierend darauf erkannt werden, ob der Fahrer des Kraftfahrzeugs gerade ein Ankuppelmanöver an den betreffenden Anhänger durchführen möchte. Durch ein Vergleichen der Positionsveränderung der Anhängerkupplung des Kraftfahrzeugs, welches noch manuell vom betreffenden Fahrer rückwärts rangiert wird, mit der Berechnungsformel kann somit auf sehr zuverlässige Weise ermittelt werden, ob der Fahrer des betreffenden Kraftfahrzeugs gerade tatsächlich ein Ankuppelmanöver an den betreffenden Anhänger durchführen möchte oder nicht.

Sobald ein vorgegebener Übereinstimmungsgrad mit einem der Positionsverläufe des Datensatzes oder der Berechnungsformel ermittelt wird, wird der Anhängerankuppelassistent des Kraftfahrzeugs automatisch aktiviert, sofern der Fahrer dies bestätigt. Dadurch kann der Fahrer des Kraftfahrzeugs bestmöglich beim Ankuppelmanöver an den Anhänger unterstützt werden, indem der aktivierte Anhängerankuppelassistent die Längs- und/oder Querführung des Kraftfahrzeugs zur Unterstützung des Ankuppelmanövers übernimmt. Beispielsweise kann der Anhängerankuppelassistent das Kraftfahrzeug vollautomatisch lenken, beschleunigen und abbremsen, bis eine fahrzeugseitige Anhängerkupplung an die Anhängerkupplung des betreffenden Anhängers positioniert worden ist. So kann beispielsweise eine fahrzeugseitige Kugelkopfkupplung passgenau unterhalb von einer Kugelkopfkupplung des Anhängers positioniert werden, wonach eine Deichsel des Anhängers beispielsweise nur noch abgesenkt werden muss, bis die Kugelkopfkupplung des Anhängers die Kugelkopfkupplung des Kraftfahrzeugs umgreift.

Mittels des erfindungsgemäßen Verfahrens wird also ein Fahrer eines Kraftfahrzeugs bestmöglich darin unterstützt, zunächst einmal automatisch zu erkennen, ob der Fahrer tatsächlich ein Ankuppelmanöver durchführen möchte, wobei in diesem Fall und wenn es der Fahrer wünscht automatisch der Anhängerankuppelassistent des Kraftfahrzeugs aktiviert wird, um den Fahrer beim Heranrangieren an den Anhänger bestmöglich zu unterstützen.

Eine vorteilhafte Ausführungsform der Erfindung sieht vor, dass sowohl beim Referenzfahrzeug als auch beim Kraftfahrzeug einer jeweiligen Position der Anhängerkupplung bezogen auf das Rückfahrkamerabild zudem noch ein jeweils erfasster Abstand zwischen dem Referenzkraftfahrzeug und dem Referenzanhänger bzw. zwischen dem Kraftfahrzeug und dem Anhänger zugeordnet wird. Der Erfindung liegt dabei die Erkenntnis zugrunde, dass beim Durchführen einer Vielzahl von Ankuppelmanövern sich ein gewisses gleichartiges Schema abbildet, gemäß welchem die jeweilige Positionsveränderung der Anhängerkupplung bezogen auf das Rückfahrkamerabild im Hinblick auf einen jeweiligen Abstand zwischen Fahrzeug und Anhänger erfolgt. Dadurch, dass sowohl beim Datensatz als auch beim Erfassen der Positionsveränderung des gerade rückwärtsfahrenden Kraftfahrzeugs jeweilige Abstände zwischen Fahrzeug und betreffendem Anhänger berücksichtigt werden, kann das Verfahren besonders zuverlässig automatisch erkennen, ob der Fahrer gerade ein Ankuppelmanöver durchführen möchte oder nicht.

Gemäß einer weiteren vorteilhaften Ausführungsform der Erfindung ist es vorgesehen, dass die jeweiligen Abstände mittels Odometrie ermittelt werden. Auf diese Weise ist es besonders einfach und zuverlässig möglich, den jeweiligen Abstand zwischen den betreffenden Kraftfahrzeugen und betreffenden Anhängern besonders zuverlässig zu ermitteln.

In weiterer vorteilhafter Ausgestaltung der Erfindung ist es vorgesehen, dass der Datensatz in einen nicht linearen Bereich, in welchem die Positionsverläufe gekrümmt sind, und einen linearen Bereich, in welchem die Positionsverläufe zumindest im Wesentlichen gerade bis zum einem Ankuppelbereich verlaufen, unterteilt wird, wobei beim Vergleichen der Positionsveränderung der Anhängerkupplung mit den Positionsverläufen des Datensatzes nur der lineare Bereich berücksichtigt wird oder sowohl der nicht lineare als auch der lineare Bereich berücksichtigt werden. Im linearen Bereich sind die Positionsverläufe zumindest im Wesentlichen alle gerade, also in Form einer linearen Linie bis auf einen Zielbereich zu, der zum Ankuppeln des betreffenden Anhängers mit dem Kraftfahrzeug angefahren werden soll. In diesem linearen Bereich ist es mit einer besonders niedrigen Fehlerrate möglich, automatisch ein von einem Fahrer geplantes Ankuppelmanöver des Kraftfahrzeugs zu erkennen. Wenn hingegen sowohl der nicht lineare als auch der lineare Bereich berücksichtigt werden, ist es insbesondere im nicht linearen Bereich besonders frühzeitig möglich, ein geplantes Ankuppelmanöver zu erkennen. Dies geht allerdings mit einem etwas erhöhten Rechenaufwand einher, da mit einer Funktion höherer Ordnung extrapoliert werden muss. Im Gegensatz zur ausschließlichen Betrachtung des linearen Bereichs bringt die zusätzliche Betrachtung bzw. Berücksichtigung des nicht linearen Bereichs also den Vorteil mit sich, dass ein geplantes Ankuppelmanöver relativ früh erkannt werden kann, wobei es jedoch zu häufigeren Fehleinschätzungen kommen kann, als wenn nur der lineare Bereich berücksichtigt wird. Beide Vorgehensweisen bringen also gewisse Vorteile mit sich.

Eine weitere vorteilhafte Ausführungsform der Erfindung sieht vor, dass die Positionsveränderung der Anhängerkupplung des Anhängers ausschließlich in Querrichtung des Kamerabilds bezogen auf einen jeweiligen Abstand zwischen Kraftfahrzeug und Anhänger ermittelt und mit den Positionsverläufen des Datensatzes verglichen wird, welche ihrerseits ausschließlich die Positionsveränderungen der Anhängerkupplung des Referenzanhängers in Querrichtung bezogen auf einen jeweiligen Abstand zwischen dem Referenzkraftfahrzeug und dem Referenzanhänger umfassen. Dieser Vorgehensweise liegt die Erkenntnis zugrunde, dass im Hinblick auf die jeweilige Positionsveränderung der Anhängerkupplungen in Querrichtung des Kamerabilds besonders frühzeitig, also bereits bei relativ großen Abständen zwischen Kraftfahrzeug und Anhänger, ein linearer Verlauf erkennbar ist. Mit anderen Worten ist ein linearer Verlauf der Positionsveränderung der Anhängerkupplung auf einen Zielbereich zu bereits bei einer relativ großen Entfernung vorhanden im Gegensatz zu einer Positionsveränderung in Hochrichtung des Kamerabilds. Selbst bei einem vollen Lenkeinschlag ist bereits auf einer Entfernung von 4 Metern ein linearer Verlauf bezüglich der Positionsveränderung der Anhängerkupplung innerhalb des Kamerabilds erkennbar. Bei geringeren Lenkwinkeln ist dies sogar noch früher, also bei bereits weitaus größeren Abständen zwischen Kraftfahrzeug und Anhänger der Fall. Daher bietet dieser Ansatz den Vorteil, dass ein Ankuppelmanöver des Fahrers bereits sehr früh erkannt werden kann. Beispielsweise lässt sich die jeweilige Bildkoordinate der Anhängerkupplung in Querrichtung des Kamerabilds in einem Bereich zwischen 2 bis 4 Metern Entfernung zwischen Kraftfahrzeug und Anhänger verfolgen. Liegt beim Rückwärtsfahren des Kraftfahrzeugs ein annähernd linearer Verlauf der Positionsveränderung der Anhängerkupplung bezogen auf das Kamerabild vor, kann mit sehr größer Sicherheit von einem geplanten Ankuppelvorgang bzw. Ankuppelmanöver ausgegangen werden.

Eine alternative vorteilhafte Ausführungsform der Erfindung sieht vor, dass beim Vergleichen der Positionsveränderung der Anhängerkupplung mit den Positionsverläufen des Datensatzes die Positionsveränderung der Anhängerkupplung in Querrichtung und Hochrichtung des Rückfahrkamerabilds berücksichtigt wird. Bei diesem Ansatz lässt sich ab einer Entfernung von ca. 1,7 Metern ein Tracken der Anhängerkupplung realisieren, wobei bei einem annähernd linearen Verlauf in Richtung Zielbereich von einem Ankuppelmanöver des Fahrers ausgegangen werden kann. Vorteilhaft an diesem Ansatz ist, dass man ausschließlich das Bild der Rückfahrkamera verwenden muss, um den Ankuppelvorgang zu antizipieren. Der Assistenzvorschlag bzw. die automatische Aktivierung des Anhängerankuppelassistenten erfolgt im Vergleich zur anderen Alternative jedoch erst relativ nah am Anhänger, da das Tracken der Anhängerkupplung über eine gewisse Wegstrecke erfolgen muss, um diese Vorgehensweise möglichst robust gegenüber Ausreißern auszulegen.

Gemäß einer weiteren vorteilhaften Ausführungsform der Erfindung ist es vorgesehen, dass beim Erfassen der Positionsveränderung der Anhängerkupplung innerhalb des Rückfahrkamerabilds einzelne Positionen der Anhängerkupplung auf dem Rückfahrkamerabild ermittelt und durch diese ermittelten Positionen eine Trendlinie gelegt wird, welche beim Vergleichen der Positionsveränderung der Anhängerkupplung mit den Positionsverläufen des Datensatzes verglichen wird. Es werden vorzugsweise also nicht streng jeweils zwei aufeinanderfolgende Punkte bzw. Positionen betrachtet, sondern eine Trendlinie durch mehrere Punkte bzw. Positionen bestimmt. Vorteil dieser Vorgehensweise ist ein dadurch deutlich geringerer Rechenaufwand. Damit einhergehen kann zwar eine etwas verspätete Erkennung eines geplanten Ankuppelmanövers, was sich jedoch positiv auf die sehr geringe Fehlerrate auswirkt.

Das erfindungsgemäße System zum automatischen Erkennen eines Ankuppelmanövers eines Kraftfahrzeugs an einen Anhänger ist dazu eingerichtet, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zum Durchführen der Verfahrensschritte umfasst. Das System umfasst insbesondere eine Datenverarbeitungseinrichtung, welche dazu ausgelegt ist, den vorstehend erwähnten Datensatz einzulesen und auszuwerten sowie Daten von einer Rückfahrkamera des Kraftfahrzeugs zu empfangen und auszuwerten, um die besagte Positionsveränderung der Anhängerkupplung des Anhängers innerhalb eines Rückfahrkamerabilds des rückwärtsfahrenden Kraftfahrzeugs zu erfassen. Zudem kann die Datenverarbeitungseinrichtung den besagten Vergleich zu jener Positionsveränderung der Anhängerkupplung und den Positionsverläufen des Datensatzes vornehmen und ermitteln, ob der vorgegebene Übereinstimmungsgrad mit einem der Positionsverläufe vorliegt, um ggf. eine automatische Aktivierung des Anhängerankuppelassistenten des Kraftfahrzeugs zu bewirken.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines Kraftfahrzeugs, welches gerade rückwärts an einen Anhänger heranrangiert wird;
- Fig. 2: ein Rückfahrkamerabild einer Rückfahrkamera des rückwärtsfahrenden Kraftfahrzeugs, während dieses an den Anhänger heranfährt;
- Fig. 3: eine erste Darstellung eines Datensatzes, der für eine Vielzahl von beim Rückwärtsfahren durchgeführten Ankuppelmanövern eines Referenzkraftfahrzeugs an eine Anhängerkupplung eines Referenzanhängers jeweilige Positionsverläufe umfasst, die jeweilige Positionsveränderungen der Anhängerkupplung innerhalb eines Rückfahrkamerabilds des Referenzkraftfahrzeugs charakterisieren, wobei die Positionsverläufe in Querrichtung und Hochrichtung des Kamerabilds aufgetragen sind; und
- Fig. 4: eine weitere Darstellung des Datensatzes, wobei die Positionsverläufe der Anhängerkupplung des Referenzanhängers bezogen auf eine Querrichtung des Rückfahrkamerabilds des Referenzkraftfahrzeugs zugeordnet zu jeweiligen Abständen zwischen Referenzkraftfahrzeug und Referenzanhänger dargestellt sind.

In den Figuren sind gleiche oder funktionsgleiche Elemente mit den gleichen Bezugszeichen versehen worden.

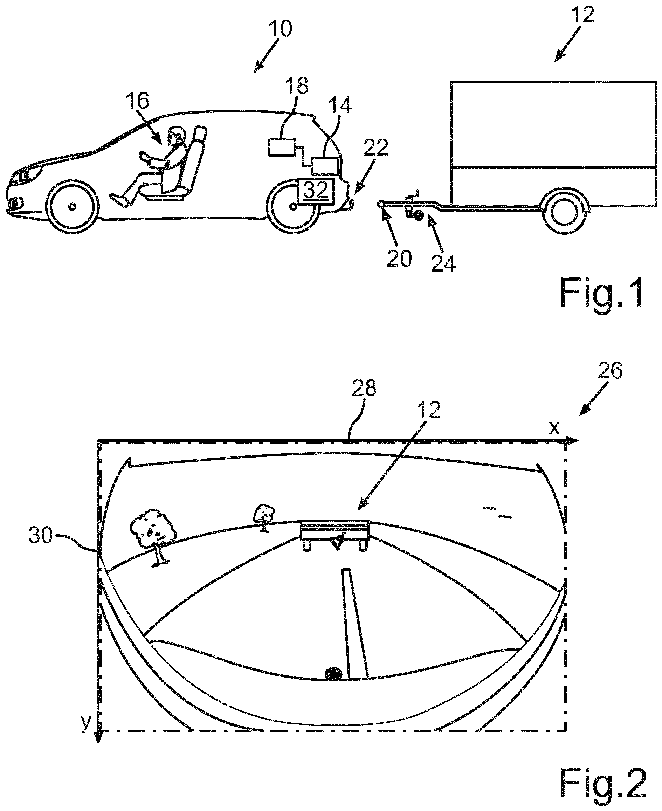

Ein Kraftfahrzeug 10, welches gerade rückwärts an einen Anhänger 12 heranfährt, ist in einer schematischen Seitenansicht in Figur 1 gezeigt. Das Kraftfahrzeug 10 umfasst eine Rückfahrkamera 14, so dass ein Fahrer 16 beim rückwärts Heranrangieren an den Anhänger 12 diesen im Fahrzeuginnenraum auf einem nicht näher gekennzeichneten Display erkennen kann. Zudem umfasst das Kraftfahrzeug 10 noch einen Anhängerankuppelassistenten, welcher dazu ausgelegt ist, eine Längs- und/oder Querführung des Kraftfahrzeugs zur Unterstützung eines Ankuppelmanövers zu übernehmen. Der Anhängerankuppelassistent 18 kann dafür insbesondere in die Lenkung, die Bremsen und die Motorsteuerung eingreifen, um das Kraftfahrzeug 10 beispielsweise vollautomatisch rückwärts an den Anhänger 12 heran zu rangieren, und zwar derart, dass eine Anhängerkupplung 20 des Anhängers 12 und eine Anhängerkupplung 22 des Kraftfahrzeugs 10 passend zueinander positioniert werden. So kann der Anhängerankuppelassistent 18 beispielsweise das Kraftfahrzeug 10 vollautomatisch rückwärts in Richtung des Anhängers 12 rangieren, und zwar bis die Anhängerkupplung 22 des Kraftfahrzeugs 10 sich direkt unterhalb von der Anhängerkupplung 20 des Anhängers 12 befindet. Anschließend muss eine Deichsel 24 des Anhängers 12 beispielsweise nur noch abgesenkt werden, bis die beiden Anhängerkupplungen 20, 22 miteinander verbunden sind.

Nachfolgend wird ein Verfahren zum automatischen Erkennen eines Ankuppelmanövers des Kraftfahrzeugs 10 anhand der weiteren Figuren beschrieben.

In Figur 2 ist ein Rückfahrkamerabild 26 dargestellt, welches mittels der Rückfahrkamera 14 des Kraftfahrzeugs 10 beim rückwärts Heranfahren in Richtung des Anhängers 12 aufgezeichnet wird. Dabei ist schematisch ein Bildkoordinatensystem anhand jeweiliger Achsen 28, 30 angedeutet, welches eine Querrichtung x und eine Hochrichtung y bezüglich des Rückfahrkamerabilds 26 kennzeichnet. Zum automatischen Erkennen eines vom Fahrer 16 eventuell geplanten Ankuppelmanövers des Kraftfahrzeugs 10 an den Anhänger 12 ist es vorgesehen, eine Positionsveränderung der Anhängerkupplung 20 des Anhängers 12 innerhalb des Rückfahrkamerabilds 26 des rückwärtsfahrenden Kraftfahrzeugs 10 fortlaufend mittels eines Systems 32 des Kraftfahrzeugs 10 zu erfassen. Zudem wird mittels des Systems 32 ein Datensatz bereitgestellt, der für eine Vielzahl von beim Rückwärtsfahren durchgeführten Ankuppelmanövern eines Referenzkraftfahrzeugs an eine Anhängerkupplung eines Referenzanhängers jeweilige Positionsverläufe umfasst, die jeweilige Positionsveränderungen der Anhängerkupplung innerhalb eines Rückfahrkamerabilds des Referenzkraftfahrzeugs charakterisieren. Dieser Datensatz kann beispielsweise im Rahmen der Produktion des Kraftfahrzeugs 10 in einen entsprechenden Speicher aufgespielt werden, so dass dieser Datensatz dem System 32 zur Verfügung steht. So können beispielsweise mehrere Hundert Rückwärtsfahrten vom besagten Referenzkraftfahrzeug gespeichert werden, welche alle Ankuppelmanöver des Referenzkraftfahrzeugs an dem besagten Referenzanhänger betrafen. Dieser Datensatz beinhaltet also eine Vielzahl von Positionen der Anhängerkupplung des Referenzanhängers innerhalb eines Rückfahrkamerabilds. So können verschiedenste Positionsverläufe bereitgestellt werden, welche sich beim rückwärts Heranfahren an einen Anhänger ergeben. All diese Positionsverläufe charakterisieren also unterschiedliche Ankuppelmanöver, welche zum Ankuppeln des Referenzfahrzeugs an den Referenzanhänger geführt haben.

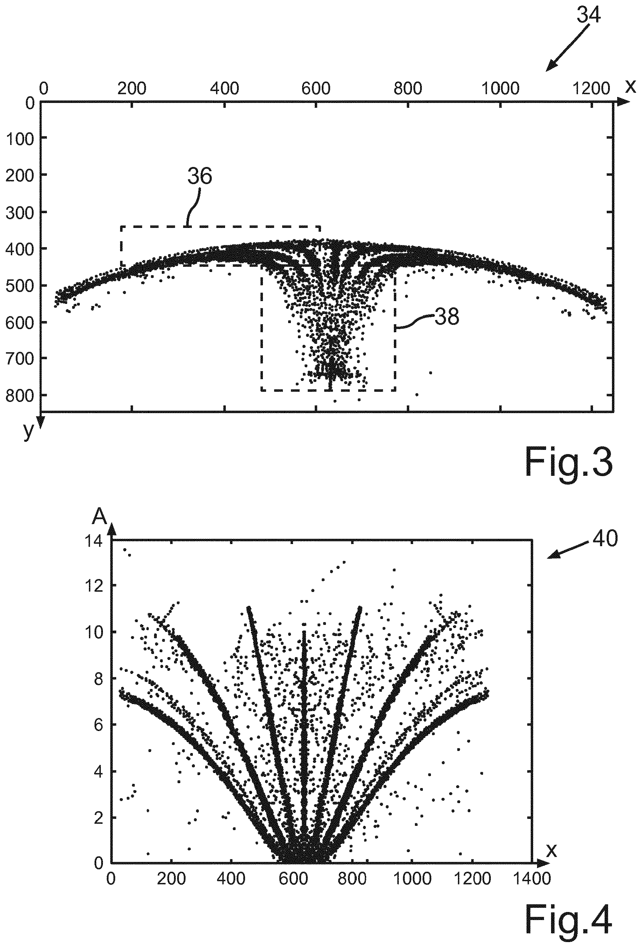

In Figur 3 ist ein Diagramm 34 gezeigt, welches die besagten Positionsverläufe für die Vielzahl der durchgeführten Ankuppelmanöver zeigt. Die nicht näher bezeichneten Punkte sind alle verschiedene Positionen der Anhängerkupplung des Referenzanhängers, und zwar so wie sie innerhalb des Rückfahrkamerabilds des Referenzkraftfahrzeugs beim rückwärts Heranfahren an den Referenzanhänger aufgetaucht sind. Diese unterschiedlichen Punkte und die sich darauf ergebenden Positionsverläufe spiegeln alle verschiedene Fahrmanöver mit unterschiedlichen Lenkwinkeln und Ausrichtungen des Referenzkraftfahrzeugs zum Referenzanhänger wieder. Es wird deutlich, dass sich die Anhängerkupplung bezogen auf das Rückfahrkamerabild immer auf einem festen "Schirm" bewegt und am Ende in einem bestimmten Zielbereich liegt, bezogen auf die Querrichtung einer Koordinatenposition 580 bis 650 und bezogen auf die Hochrichtung y bei ca. 750. Die Größe dieses Zielbereichs ist davon abhängig, wie genau die betreffende Anhängerkupplung beim manuellen Ankuppeln ohne Assistenzsystem getroffen wird.

Die Positionsverläufe kann man nun in zwei Bereiche unterteilen, die für die Erkennung des Ankuppelmanövers separat betrachtet und ausgewertet werden können. Der Datensatz kann einerseits in einen nicht linearen Bereich 36 und in einen linearen Bereich 38 unterteilt werden. In dem nicht linearen Bereich 36 sind die Positionsverläufe gekrümmt. Im linearen Bereich 38 hingegen sind die Positionsverläufe zumindest im Wesentlichen gerade bis zum Zielbereich bzw. Ankuppelbereich.

Die Positionsveränderungen bzw. Daten aus dem nicht linearen Bereich können mittels Extrapolation verarbeitet werden. Ein vom Fahrer 16 geplantes Ankuppelmanöver kann dabei sehr früh erkannt werden, erhöht aber auch die Wahrscheinlichkeit für eine Falschdetektion. Zudem ist der Rechenaufwand relativ hoch, da mit einer Funktion höherer Ordnung extrapoliert werden muss.

Im linearen Bereich 38 hingegen folgen die einzelnen Bildpunkte zumindest im Groben einer linearen Linie auf den Zielbereich zu. Hier kann die Steigung zwischen einzelnen Punkten herangezogen werden. Um die Aussagen robuster gegenüber Ausreißern, z.B. durch Lenkkorrekturen des Fahrers auszulegen, werden vorzugsweise nicht zwei aufeinanderfolgende Punkte betrachtet, sondern eine Trendlinie durch mehrere Punkte gelegt bzw. bestimmt. Der Vorteil bei dieser Vorgehensweise ist ein relativ geringer Rechenaufwand. Allerdings ist bei reiner Berücksichtigung des linearen Bereichs 38 die automatische Erkennung eines Ankuppelmanövers relativ spät bezogen auf die erforderliche Annäherung des Kraftfahrzeugs 10 an den Anhänger 12. Allerdings ist die Fehlerrate sehr niedrig, wenn man nur den linearen Bereich 38 betrachtet.

Ganz allgemein wird zur automatischen Erkennung eines eventuell geplanten Ankuppelmanövers des Fahrers 16 die tatsächliche Positionsveränderung der Anhängerkupplung 20 des Anhängers 12 mit den Positionsverläufen des Datensatzes - wie beispielsweise in Figur 3 dargestellt - verglichen. Sobald ein vorgegebener Übereinstimmungsgrad mit einem der Positionsverläufe ermittelt wird, wird eine Abfrage mittels des Kraftfahrzeugs 10 ausgegeben, ob der Fahrer 16 eine automatische Aktivierung des Anhängerankuppelassistenten 18 wünscht. Nur im Falle einer Bestätigung durch den Fahrer 16 erfolgt eine automatische Aktivierung des Anhängerankuppelassistenten 18. Diese Abfrage kann beispielsweise optisch und/oder akustisch im Fahrzeuginnenraum ausgegeben werden, wobei der Fahrer 16 wiederum beispielsweise durch Betätigung einer Taste und/oder einen Sprachbefehl bestätigen oder ablehnen kann.

Alternativ kann auch eine Berechnungsformel basierend auf dem Datensatz im Kraftfahrzeug 10 bereitgestellt werden. Zur automatischen Erkennung eines eventuell geplanten Ankuppelmanövers des Fahrers 16 wird die tatsächliche Positionsveränderung der Anhängerkupplung 20 des Anhängers 12 mit der Berechnungsformel verglichen. Beispielsweise kann mittels der Berechnungsformel eine Steigung für eine durch zwei Positionen der Anhängerkupplung 20 des Anhängers gelegten Geraden ermittelt und basierend darauf bestimmt werden, ob der Fahrer 16 ein Ankuppelmanöver durchführen möchte.

Sowohl beim besagten Referenzfahrzeug zur Generierung des Datensatzes als auch beim Kraftfahrzeug 10 wird vorzugsweise einer jeweiligen Position der Anhängerkupplung 20 bezogen auf das Rückfahrkamerabild 26 zudem noch ein jeweils erfasster Abstand zwischen dem Kraftfahrzeug 10 und einem Anhänger 12 bzw. zwischen dem Referenzkraftfahrzeug und dem Referenzanhänger zugeordnet. Dadurch können besonders zuverlässige Aussagen darüber getroffen werden, ob der Fahrer 16 tatsächlich ein Ankuppelmanöver an den Anhänger 12 plant oder nicht. Die jeweiligen Abstände können beispielsweise mittels Odometrie ermittelt werden.

Der lineare Bereich 38 beginnt ca. ab einem Abstand zwischen Kraftfahrzeug 10 und Anhänger 12 bei einem Wert von ca. 1,7 Metern. Ab einer Entfernung von 1,7 Metern zum Anhänger 12 kann sich also ein Tracken bzw. Überwachen der Anhängerkupplung 20 zuverlässig realisieren lassen. Falls dann festgestellt wird, dass die Anhängerkupplung 20 innerhalb des Rückfahrkamerabilds 26 eine annähernd lineare Positionsveränderung durchführt, wird von einem seitens des Fahrers 16 geplanten Ankuppelmanöver ausgegangen. Vorteilhaft bei dieser Vorgehensweise ist, dass man sich ausschließlich auf das Bild der Rückfahrkamera 14 beschränken muss, um einen Ankuppelvorgang bzw. ein Ankuppelmanöver, welches der Fahrer durchführen möchte, antizipieren zu können.

Alternativ ist es aber auch möglich, sowohl den nicht linearen Bereich 36 als auch den linearen Bereich 38 zu berücksichtigen. In dem Fall ist es - ggf. mit einer etwas höheren Fehlerrate - schon früher möglich zu erkennen, ob der Fahrer 16 tatsächlich ein Ankuppelmanöver an den Anhänger 12 vornehmen möchte.

In Figur 4 ist ein weiteres Diagramm 40 gezeigt, welches eine Repräsentation des besagten Datensatzes darstellt. Vorliegend ist auf der Abszissenachse die Querrichtung des Rückfahrkamerabilds 26 aufgetragen, wobei auf der Ordinatenachse ein Abstand zwischen Fahrzeug und Anhänger aufgetragen ist. Zum automatischen Erkennen eines Ankuppelmanövers des Fahrers 16 ist es möglich, ausschließlich die Positionsveränderung der Anhängerkupplung 20 des Anhängers 12 in Querrichtung x des Rückfahrkamerabilds 26 bezogen auf einen jeweiligen Abstand zwischen Kraftfahrzeug 10 und Anhänger 12 zu ermitteln. Dies wird mit den in Figur 4 dargestellten Positionsverläufen des Datensatzes verglichen, welche ihrerseits ausschließlich die Positionsveränderung der Anhängerkupplung des Referenzanhängers in Querrichtung x bezogen auf einen jeweiligen Abstand zwischen Referenzkraftfahrzeug und Referenzanhänger umfassen. Die jeweilige Entfernung zwischen Anhängerkupplung 20 des Anhängers 12 in dem Kraftfahrzeug 10 bzw. zwischen der Anhängerkupplung des Referenzanhängers und des Referenzkraftfahrzeugs im Datensatz können wiederum mittels Odometrie bestimmt werden.

Es wird deutlich, dass ein linearer Verlauf auf den Zielbereich zu bereits bei einer relativ großen Entfernung bei reiner Betrachtung der Querrichtung x vorhanden ist. Selbst bei einem vollen Lenkanschlag (dargestellt durch die äußersten beiden Äste) ist bereits ab einer Entfernung von ca. 4 Metern zwischen Anhänger und Fahrzeug ein linearer Verlauf erkennbar, bei geringeren Lenkwinkeln sogar noch früher. Daher bietet dieser Ansatz den Vorteil, dass ein Ankuppelmanöver des Fahrers 16 bereits sehr früh erkannt werden kann, insbesondere früher, als wenn die Querrichtung x und die Hochrichtung y - wie in Figur 3 dargestellt - Berücksichtigung finden.

Beispielsweise lässt sich die Positionsveränderung der Anhängerkupplung 20 des Anhängers 12 in einem Bereich zwischen 2 bis 4 Metern Entfernung zwischen dem Kraftfahrzeug 10 und dem Anhänger 12 verfolgen. Auch hier kann eine Trendlinie durch mehrere Punkte gelegt werden, um den Einfluss von Lenkkorrekturen des Fahrers 16 gering zu halten. Liegt ein annähernd linearer Verlauf in dem Zielbereich vor, wird von einem geplanten Ankuppelmanöver des Fahrers 16 ausgegangen und diesem angeboten, den Anhängerankuppelassistenten 18 zu aktivieren. Im Gegensatz zur Berücksichtigung der Querrichtung x und Hochrichtung y kann dies jedoch zu einer etwas erhöhten Fehlerrate im Hinblick auf eine zuverlässige Erkennung eines vom Fahrer 16 tatsächlich geplanten Ankuppelmanövers führen.

Insbesondere wurden also insgesamt ein Verfahren sowie ein System 32 zum automatischen Erkennen eines Ankuppelmanövers eines Kraftfahrzeugs 10 an einen Anhänger 12 erläutert, welche den Vorteil mit sich bringen, dass der Fahrer 16 nicht mehr selbständig den Anhängerankuppelassistenten 18 aktivieren muss. Stattdessen wird dem Fahrer 16 selbständig vorgeschlagen, den Anhängerankuppelassistenten 32 zu aktivieren, falls automatisch ein vom Fahrer 16 geplantes Ankuppelmanöver an den Anhänger 12 erkannt worden ist.

### Bezugszeichenliste

- 10: Kraftfahrzeug
- 12: Anhänger
- 14: Rückfahrkamera
- 16: Fahrer
- 18: Anhängerankuppelassistent
- 20: Anhängerkupplung des Anhängers
- 22: Anhängerkupplung des Kraftfahrzeugs
- 24: Deichsel des Anhängers
- 26: Rückfahrkamerabild der Rückfahrkamera
- 28: Querrichtungsachse
- 30: Hochrichtungsachse
- 32: System
- 34: Diagramm
- 36: nicht linearer Bereich
- 38: linearer Bereich
- 40: Diagramm
- x: Querrichtung des Rückfahrkamerabilds
- y: Hochrichtung des Rückfahrkamerabilds
- A: Abstand zwischen Kraftfahrzeug und Anhänger

## Patentansprüche

1. Verfahren zum automatischen Erkennen eines Ankuppelmanövers eines Kraftfahrzeugs (10) an einen Anhänger (12), umfassend die Schritte:
- Erfassen einer Positionsveränderung einer Anhängerkupplung (20) des Anhängers (12) innerhalb eines Rückfahrkamerabilds (26) des rückwärtsfahrenden Kraftfahrzeugs (10);
- Bereitstellen eines Datensatzes, der für eine Vielzahl von beim Rückwärtsfahren durchgeführten Ankuppelmanövern eines Referenzkraftfahrzeugs an eine Anhängerkupplung eines Referenzanhängers jeweilige Positionsverläufe umfasst, die jeweilige Positionsveränderungen der Anhängerkupplung (20) innerhalb eines Rückfahrkamerabilds (26) des Referenzkraftfahrzeugs charakterisieren;
- Vergleichen der Positionsveränderung der Anhängerkupplung (20) mit den Positionsverläufen des Datensatzes oder Bereitstellen einer Berechnungsformel auf Basis des Datensatzes und Vergleichen der Positionsveränderung der Anhängerkupplung (20) mit der Berechnungsformel;
- sobald ein vorgegebener Übereinstimmungsgrad mit einem der Positionsverläufe oder der Berechnungsformel ermittelt wird: Ausgeben einer Abfrage, ob ein Fahrer (16) des Kraftfahrzeugs (10) eine automatische Aktivierung eines Anhängerankuppelassistenten (18) des Kraftfahrzeugs (10) wünscht, welcher dazu ausgelegt ist, eine Längs- und/oder Querführung des Kraftfahrzeugs (10) zur Unterstützung des Ankuppelmanövers zu übernehmen, wobei nur im Fall einer Bestätigung der Abfrage eine automatische Aktivierung des Anhängerankuppelassistenten (18) erfolgt.

2. Verfahren nach Anspruch 1,
**dadurch gekennzeichnet, dass**
sowohl beim Referenzfahrzeug als auch beim Kraftfahrzeug (10) einer jeweiligen Position der Anhängerkupplung (20) bezogen auf das Rückfahrkamerabild (26) zudem noch ein jeweils erfasster Abstand zwischen dem Referenzkraftfahrzeug und dem Referenzanhänger beziehungsweise zwischen dem Kraftfahrzeug (10) und dem Anhänger (12) zugeordnet wird.

3. Verfahren nach Anspruch 2,
**dadurch gekennzeichnet, dass**
die jeweiligen Abstände mittels Odometrie ermittelt werden.

4. Verfahren nach einem der vorhergehenden Ansprüche,
**dadurch gekennzeichnet, dass**
der Datensatz in einen nichtlinearen Bereich (36), in welchem die Positionsverläufe gekrümmt sind, und einen linearen Bereich (38), in welchem die Positionsverläufe zumindest im Wesentlichen gerade bis zu einem Ankuppelbereich verlaufen, unterteilt wird, wobei beim Vergleichen der Positionsveränderung der Anhängerkupplung mit den Positionsverläufen des Datensatzes nur der lineare Bereich (38) berücksichtigt wird oder sowohl der nichtlineare als auch der lineare Bereich (36, 38) berücksichtigt werden.

5. Verfahren nach einem der vorhergehenden Ansprüche,
**dadurch gekennzeichnet, dass**
die Positionsveränderung der Anhängerkupplung des Anhängers (12) ausschließlich in Querrichtung (x) des Rückfahrkamerabilds (26) bezogen auf einen jeweiligen Abstand zwischen Kraftfahrzeug (10) und Anhänger (12) ermittelt und mit den Positionsverläufen des Datensatzes verglichen wird, welche ihrerseits ausschließlich die Positionsveränderung der Anhängerkupplung des Referenzanhängers in Querrichtung bezogen auf einen jeweiligen Abstand zwischen Referenzkraftfahrzeug und Referenzanhänger umfassen.

6. Verfahren nach einem der Ansprüche 1 bis 4,
**dadurch gekennzeichnet, dass**
beim Vergleichen der Positionsveränderung der Anhängerkupplung (20) mit den Positionsverläufen des Datensatzes die Positionsveränderung der Anhängerkupplung (20) in Querrichtung (x) und Hochrichtung (y) des Rückfahrkamerabilds (26) berücksichtigt wird.

7. Verfahren nach einem der vorhergehenden Ansprüche,
**dadurch gekennzeichnet, dass**
beim Erfassen der Positionsveränderung der Anhängerkupplung (20) innerhalb des Rückfahrkamerabilds (26) einzelne Positionen der Anhängerkupplung (20) auf dem Rückfahrkamerabild (26) ermittelt und durch diese ermittelten Positionen eine Trendlinie gelegt wird, welche beim Vergleichen der Positionsveränderung der Anhängerkupplung (20) mit den Positionsverläufen des Datensatzes verglichen wird.

8. System (32) zum automatischen Erkennen eines Ankuppelmanövers eines Kraftfahrzeugs (10) an einen Anhänger (12), **dadurch gekennzeichnet, dass** es dazu eingerichtet ist, ein Verfahren nach einem der vorhergehenden Ansprüche durchzuführen.

9. Kraftfahrzeug (10) mit einem System (32) zum automatischen Erkennen eines Ankuppelmanövers nach Anspruch 8.

## Claims

1. Method for automated detection of a coupling maneuver of a motor vehicle (10) to a trailer (12), comprising the steps of:
- detecting a change in position of a trailer coupling (20) of the trailer (12) within a reversing camera image (26) of the reversing motor vehicle (10);
- providing a data set which comprises, for a plurality of coupling maneuvers of a reference vehicle to a trailer coupling of a reference trailer, said coupling maneuvers having been implemented while driving in reverse, respective position curves which characterize respective position changes of the trailer coupling (20) within a reversing camera image (26) of the reference motor vehicle;
- comparing the change in position of the trailer coupling (20) to the position curves of the data set, or providing a calculation formula based on the data set, and comparing the change in position of the trailer coupling (20) to the calculation formula;
- as soon as a predetermined degree of correspondence to one of the position curves or the calculation formula is determined:
outputting a query as to whether a driver (16) of the motor vehicle (10) desires an automatic activation of a trailer coupling assistant (18) of the motor vehicle (10), which is designed to take over a longitudinal and/or transverse guidance of the motor vehicle (10) in order to support the coupling maneuver, wherein automatic activation of the trailer coupling assistant (18) takes place only if the query is confirmed.

2. Method according to claim 1,
**characterized in that**
both in the reference vehicle and in the motor vehicle (10), a respective detected distance between the reference motor vehicle and the reference trailer, or between the motor vehicle (10) and the trailer (12), is additionally associated with a respective position of the trailer coupling (20) relative to the reversing camera image (26).

3. Method according to claim 2,
**characterized in that**
the respective distances are determined by means of odometry.

4. Method according to one of the preceding claims,
**characterized in that**
the data set is subdivided into a non-linear region (36), in which the position curves are curved, and a linear region (38), in which the position curves run at least substantially straight, up to a coupling region, wherein only the linear region (38) is taken into account when comparing the position change of the trailer coupling to the position curves of the data set, or both the non-linear and the linear regions (36, 38) are taken into account.

5. Method according to one of the preceding claims,
**characterized in that**
the change in position of the trailer coupling of the trailer (12) is determined exclusively in the transverse direction (x) of the reversing camera image (26) relative to a respective distance between the motor vehicle (10) and trailer (12), and is compared to the position curves of the data set which in turn comprise exclusively the change in position of the trailer coupling of the reference trailer in the transverse direction relative to a respective distance between reference vehicle and reference trailer.

6. Method according to one of claims 1 to 4,
**characterized in that**
when comparing the change in position of the trailer coupling (20) to the position curves of the data set, the change in position of the trailer coupling (20) in the transverse direction (x) and the vertical direction (y) of the reversing camera image (26) is taken into account.

7. Method according to one of the preceding claims,
**characterized in that**
in detecting the position change of the trailer coupling (20) within the reversing camera image (26), individual positions of the trailer coupling (20) in the reversing camera image (26) are determined, and a trend line is placed through these determined positions, said trend line being compared to the position curves of the data set when the position change of the trailer coupling (20) is compared.

8. A system (32) for automated detection of a coupling maneuver of a motor vehicle (10) to a trailer (12),
**characterized in that**
said system is configured to implement a method according to one of the preceding claims.

9. Motor vehicle (10) having a system (32) for automated detection of a coupling maneuver according to claim 8.

## Revendications

1. Procédé de détection automatique d'une manoeuvre d'accouplement d'un véhicule automobile (10) à une remorque (12), comprenant les étapes de :
- détection d'un changement de position d'un attelage de remorque (20) de la remorque (12) à l'intérieur d'une image de caméra de recul (26) du véhicule automobile (10) roulant en marche arrière ;
- fourniture d'un ensemble de données, qui comprend, pour une pluralité de manœuvres d'accouplement effectuées en marche arrière d'un véhicule automobile de référence à un attelage de remorque d'une remorque de référence, des tracés de position respectifs, lesquels caractérisent des changements de position respectifs de l'attelage de remorque (20) à l'intérieur d'une image de caméra de recul (26) du véhicule automobile de référence ;
- comparaison du changement de position de l'attelage de remorque (20) avec les tracés de position de l'ensemble de données ou fourniture d'une formule de calcul sur la base de l'ensemble de données et comparaison du changement de position de l'attelage de remorque (20) avec la formule de calcul ;
- dès qu'un degré de concordance prédéfini avec un des tracés de position ou la formule de calcul est déterminé : émission d'une interrogation si un conducteur (16) du véhicule automobile (10) souhaite une activation automatique d'un système d'assistance d'accouplement de remorque (18) du véhicule automobile (10), lequel est conçu pour prendre en charge un guidage longitudinal et/ou transversal du véhicule automobile (10) pour l'assistance à la manœuvre d'accouplement, une activation automatique du système d'assistance à la manœuvre d'accouplement (18) ne se produisant que dans le cas d'une confirmation de l'interrogation.

2. Procédé selon la revendication 1,
**caractérisé en ce que,**
tant dans le cas du véhicule automobile de référence que dans le cas du véhicule automobile (10), une position respective de l'attelage de remorque (20) par rapport à l'image de caméra de recul (26) est associée en outre aussi à une distance respective détectée entre le véhicule automobile de référence et la remorque de référence ou entre le véhicule automobile (10) et la remorque (12).

3. Procédé selon la revendication 2,
**caractérisé en ce que**
les distances respectives sont déterminées au moyen de l'odométrie.

4. Procédé selon l'une quelconque des revendications précédentes,
**caractérisé en ce que**
l'ensemble de données est divisé en une section non linéaire (36), dans laquelle les tracés de position sont courbes, et une section linéaire (38), dans laquelle les tracés de position sont au moins essentiellement droits jusqu'à une zone d'accouplement, lors de la comparaison du changement de position de l'attelage de remorque avec les tracés de position de l'ensemble de données, seule la section linéaire (38) étant prise en compte ou les sections tant non linéaire que linéaire (36, 38) étant prises en compte.

5. Procédé selon l'une quelconque des revendications précédentes,
**caractérisé en ce que**
le changement de position de l'attelage de remorque de la remorque (12) est déterminé exclusivement dans la direction transversale (x) de l'image de caméra de recul (26) par rapport à une distance respective entre le véhicule automobile (10) et la remorque (12) et comparé aux tracés de position de l'ensemble de données, lesquels de leur côté comprennent exclusivement le changement de position de l'attelage de remorque de la remorque de référence en direction transversale par rapport à une distance respective entre le véhicule automobile de référence et la remorque de référence.

6. Procédé selon l'une quelconque des revendications 1 à 4,
**caractérisé en ce que**
lors de la comparaison du changement de position de l'attelage de remorque (20) avec les tracés de position de l'ensemble de données, le changement de position de l'attelage de remorque (20) dans la direction transversale (x) et la direction ascendante (y) de l'image de caméra de recul (26) est pris en compte.

7. Procédé selon l'une quelconque des revendications précédentes,
**caractérisé en ce que**
lors de la détection du changement de position de l'attelage de remorque (20) à l'intérieur de l'image de caméra de recul (26), des positions individuelles de l'attelage de remorque (20) sur l'image de caméra de recul (26) sont déterminées et, au moyen de ces positions déterminées, une ligne de tendance est placée, laquelle est comparée lors de la comparaison du changement de position de l'attelage d'accouplement (20), avec les tracés de position de l'ensemble de données.

8. Système (32) de détection automatique d'une manœuvre d'accouplement d'un véhicule automobile (10) à une remorque (12),
**caractérisé en ce que,**
il est conçu pour exécuter un procédé selon l'une quelconque des revendications précédentes.

9. Véhicule automobile (10) comprenant un système (32) de détection automatique d'une manœuvre d'accouplement selon la revendication 8.
